# EUROPEAN PATENT APPLICATION

(11) **EP 4 768 922 A1**
(43) Date of publication of application: **01.07.2026**
(21) Application number: 25213351.7
(22) Date of filing: 04.11.2025
(51) Int. Cl.: G01P 21/02, G01P 3/24, G01P 3/64, G01M 17/007, G01P 3/04

(54) **SYSTEM**

(30) Priority: 25.12.2024 JP 2024228091
(71) Applicant: TOYOTA JIDOSHA KABUSHIKI KAISHA, Toyota-shi, Aichi-ken 471-8571 (JP)
(72) Inventor: KOIDE, Toshihiro, Toyota-shi, 471-8571 (JP); SHIMIZU, Koji, Toyota-shi, 471-8571 (JP); KOYAMA, Keisuke, Toyota-shi, 471-8571 (JP)
(74) Representative: TBK

(57) **Abstract**

A system includes a first acquisition unit, a second acquisition unit, and an inspection execution unit. The first acquisition unit acquires first speed from inspection equipment. The inspection equipment includes a roller that is rotatable while supporting a wheel of a vehicle and measures speed of the vehicle by utilizing a rotation of the roller.. The first speed is the speed measured by the inspection equipment. The second acquisition unit acquires second speed during measurement of the speed of the vehicle by using the inspection equipment. The second speed is speed displayed on a display device included in the vehicle to display the speed of the vehicle. The inspection execution unit uses the acquired first speed and the acquired second speed to execute inspection of the display device.

## Description

### CROSS-REFERENCE TO RELATED APPLICATIONS

This application claims priority to Japanese Patent Application No. 2024-228091 filed on December 25, 2024, which is incorporated herein by reference in its entirety.

### BACKGROUND

### FIELD

The present disclosure relates to a system.

### RELATED ART

Japanese Translation of PCT International Application Publication No. JP-T-2017-538619 discloses a technology to control a vehicle to run autonomously or by remote control in a production step of the vehicle.

In a production step of a vehicle, inspection of a speedometer that displays vehicle speed of the vehicle is performed. This inspection is performed by comparison between speed measured by inspection equipment including a roller that is rotatable while supporting a wheel and speed displayed on the speedometer equipped on the vehicle. Here, the speed displayed on the speedometer is measured visually by an inspector, and thus the inspection result may depend on the inspector's skill.

### SUMMARY

The present disclosure is achievable as the following aspects.

According to one aspect of the present disclosure, a system is provided. The system includes a first acquisition unit, a second acquisition unit, and an inspection execution unit. The first acquisition unit acquires first speed from inspection equipment. The inspection equipment includes a roller that is rotatable while supporting a wheel of a vehicle and measures speed of the vehicle by utilizing a rotation of the roller. The first speed is the speed measured by the inspection equipment. The second acquisition unit acquires second speed during measurement of the speed of the vehicle by using the inspection equipment. The second speed is speed displayed on a display device included in the vehicle to display the speed of the vehicle. The inspection execution unit uses the acquired first speed and the acquired second speed to execute inspection of the display device.

The present disclosure can be implemented in aspects other than the aspect as the system described above. Examples of the aspects include a control device, a vehicle, an inspection method, a program to implement an inspection method, and a program product including a program. The program product may be, for example, a non-transitory recording medium recording a program, or intangible software distributable over a network.

### BRIEF DESCRIPTION OF THE DRAWINGS

Fig. 1 is a conceptual diagram illustrating a configuration of a system according to a first embodiment;
Fig. 2 is a block diagram illustrating configurations of a system and a vehicle;
Fig. 3 is an explanatory diagram illustrating a configuration of inspection equipment;
Fig. 4 is a flowchart illustrating a procedure of running control of the vehicle according to the first embodiment;
Fig. 5 is a flowchart illustrating a procedure of inspection of a display device;
Fig. 6 is a block diagram illustrating a configuration of a system according to a second embodiment;
Fig. 7 is an explanatory diagram illustrating a schematic configuration of a system according to a third embodiment; and
Fig. 8 is a flowchart illustrating a procedure of running control of a vehicle according to the third embodiment.

### DETAILED DESCRIPTION

### A. First Embodiment:

### <Overview of System 50>

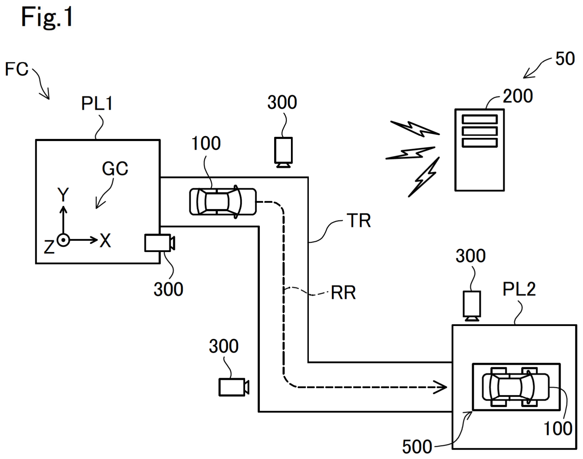

Fig. 1 is a conceptual diagram illustrating a configuration of a system 50 according to a first embodiment. The system 50 executes control and inspection of one or more vehicles 100 as a moving object(s). The system 50 includes a server 200 and one or more sensors 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In this embodiment, the system 50 is used in a factory FC where the vehicle 100 is produced. The reference coordinate system of the factory FC is a global coordinate system GC and a location in the factory can be expressed by X, Y, and Z coordinates in the global coordinate system GC. The factory FC includes a first place PL1 and a second place PL2. The first place PL1 and the second place PL2 are connected to one another through a track TR1 on which the vehicle 100 is runnable. The vehicle 100 moves by unmanned driving from the first place PL1 to the second place PL2 through the track TR1. At the first place PL1 and the second place PL2, assembly and a variety of inspections to produce the vehicle 100 are performed.

Inspection equipment 500 is provided at the second place PL2. The vehicle 100 that has moved to the second place PL2 moves onto the inspection equipment 500 by unmanned driving to undergo inspection. Details of the inspection equipment 500 will be described later.

At the first place PL1, the second place PL2, and the track TR, a plurality of sensors 300 is disposed. The sensor 300 is a sensor located outside the vehicle 100. The sensor 300 in this embodiment is a sensor that captures the vehicle 100 from outside of the vehicle 100. The sensor 300 includes, for example, a camera. The sensor 300 includes a communication device (not illustrated) and can communicate with another device, such as the server 200, by wired or wireless communication.

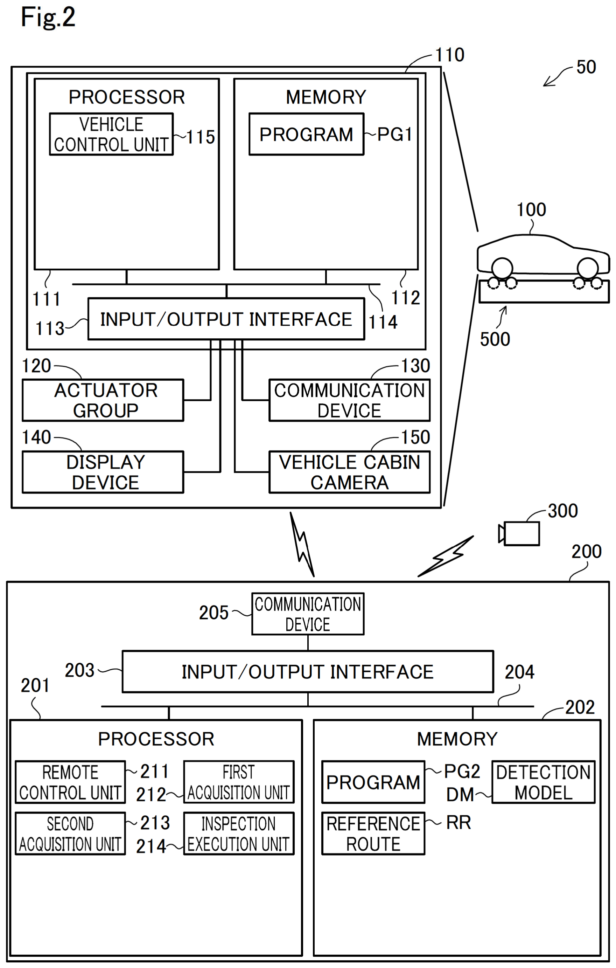

<Configurations of System 50 and Vehicle 100>
Fig. 2 is a block diagram illustrating configurations of the system 50 and the vehicle 100. The vehicle 100 includes a vehicle control device 110 to control each part of the vehicle 100, an actuator group 120 including one or more actuators that perform driving under control of the vehicle control device 110, a communication device 130 to communicate with an external device, such as the server 200, by wireless communication, a display device 140 that displays speed of the vehicle 100, and a vehicle cabin camera 150. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The processor 111 executes a program PG1 stored in the memory 112, thus implementing various functions including a function as a vehicle control unit 115. Moreover, the vehicle control device 110 controls the display device 140.

The vehicle control unit 115 controls the actuator group 120 to cause the vehicle 100 to run. The vehicle control unit 115 can use a running control signal received from the server 200 to control the actuator group 120, thereby causing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The display device 140 is a so-called speedometer that displays speed of the vehicle 100. The speed of the vehicle 100 is measured by using a vehicle speed sensor provided to the vehicle 100. The vehicle speed sensor detects a number of rotations of a wheel of the vehicle 100. The vehicle control device 110 uses the detected number of rotations of the wheel and a perimeter of the wheel to calculate the speed of the vehicle 100. The calculated speed is transmitted to the display device 140. The vehicle speed sensor may calculate the speed of the vehicle 100 by any method, not limited to the above methods.

The vehicle cabin camera 150 is provided to the vehicle 100, images a vehicle cabin, and outputs image data. The vehicle cabin camera 150 in this embodiment includes the display device 140 within an angle of view. It can be said that the speed displayed on the display device 140 is acquired by the vehicle cabin camera 150. The image data is transmitted to the server 200 via the communication device 130.

### <Configuration of Server 200>

The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices outside of the server 200 is coupled to the input/output interface 203. The communication device 205 can communicate with the vehicle 100 by wireless communication and can communicate with each sensor 300 by wired or wireless communication. The processor 201 executes a program PG2 stored in the memory 202, thus implementing various functions including functions as a remote control unit 211, a first acquisition unit 212, a second acquisition unit 213, and an inspection execution unit 214.

The remote control unit 211 acquires a detection result of the sensor and uses the detection result to generate the running control signal to control the actuator group 120 of the vehicle 100. The remote control unit 211 then transmits the running control signal to the vehicle 100 to control unmanned driving of the vehicle 100. The remote control unit 211 may generate and output not only the running control signal but also control signals to control, for example, actuators that operate various auxiliary machines and various types of equipment including a wiper, a power window, and a light provided to the vehicle 100. That is, the remote control unit 211 may operate these various types of equipment and various auxiliary machines by remote control.

The first acquisition unit 212 acquires, from the inspection equipment 500 described later, first speed that is speed measured by the inspection equipment 500. Details will be described later.

The second acquisition unit 213 acquires second speed that is the speed displayed on the display device 140 during measurement of the speed of the vehicle 100 by using the inspection equipment 500. In this embodiment, the second speed is acquired by using the image data imaged by the vehicle cabin camera 150. Specifically, the second acquisition unit 213 uses the image data and a known image recognition technology to acquire as the second speed the speed displayed on the display device 140.

The inspection execution unit 214 uses the first speed acquired by the first acquisition unit 212 and the second speed acquired by the second acquisition unit 213 to execute inspection regarding accuracy of the speed displayed on the display device 140. In this embodiment, the inspection is executed through determination of whether difference between the first speed and the second speed is within a predetermined range. The predetermined range is set as a margin of error that is allowable as the speed displayed on the display device 140. For example, the predetermined range is 10 km/h or less. The predetermined range is stored in the memory 202 in advance. The determination is performed in such a way that the first speed is subtracted from the second speed to calculate an absolute value of the difference between the first speed and the second speed, and then whether the absolute value of the difference is within the predetermined range is determined. The inspection execution unit 214 causes the memory 202 to store a determination result obtained in this manner. The determination result includes the results that the difference between the first speed and the second speed is within the predetermined range and that the difference between the first speed and the second speed is out of the predetermined range. The inspection execution unit 214 may cause the memory 202 to store, in addition to the determination result, the difference between the first speed and the second speed. Details of the inspection will be described later.

### <Configuration of Inspection Equipment 500>

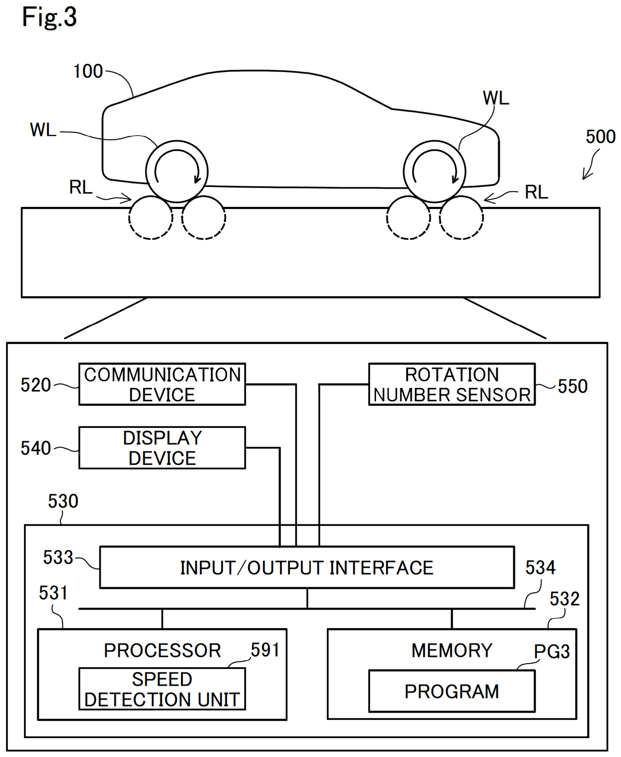

Fig. 3 is an explanatory diagram illustrating a configuration of the inspection equipment 500. The inspection equipment 500 is used for the inspection of the display device 140 that displays the speed of the vehicle 100. The inspection equipment 500 includes a plurality of rollers RL, a rotation number sensor 550, an equipment control device 530, a communication device 520, and a display device 540.

Each of the plurality of rollers RL is embedded in a road surface in such a manner as to be partly exposed. Each roller RL is rotatable while supporting a wheel WL of the vehicle 100. Each roller RL includes a rotation axis in a left-right direction of the vehicle 100. Each roller RL is made of metal. In this embodiment, one wheel WL is supported while being sandwiched between two rollers RL aligned in a front-rear direction of the vehicle 100. When the vehicle 100 is a four-wheeled vehicle, one inspection equipment 500 includes eight rollers RL. The respective rollers RL include configurations similar to one another. Each roller RL rotates in response to rotation of the wheel WL. Therefore, the vehicle 100 supported by the plurality of rollers RL can rotate the wheel WL without moving in the front-rear direction. Portions of multiple wheels WL may be supported by a single roller RL.

The rotation number sensor 550 detects a number of rotations of the roller RL. The detected number of rotations is transmitted to the equipment control device 530.

The equipment control device 530 includes a computer including a processor 531, a memory 532, an input/output interface 533, and an internal bus 534. The processor 531, the memory 532, and the input/output interface 533 are coupled to one another via the internal bus 534 in a bidirectionally communicable manner. Moreover, the communication device 520 and the rotation number sensor 550 are coupled to the input/output interface 533. In this embodiment, the communication device 520 communicates with the server 200 by wireless or wired communication. The communication device 520 may communicate with the vehicle 100 by wireless communication. The processor 531 executes a program PG3 stored in the memory 532, thus implementing various functions including a function as a speed detection unit 591.

The speed detection unit 591 uses the number of rotations of the roller RL detected by the rotation number sensor 550 to measure the speed of the vehicle 100 that runs on the inspection equipment 500 while being supported by the plurality of rollers RL. Note that "speed" includes the speed of vehicle 100 when the vehicle 100 is running on the inspection equipment 500 but its actual position does not change. The speed detection unit 591 uses the detected number of rotations of the roller RL and a perimeter of the roller RL to calculate circumferential speed of the roller RL. The calculated circumferential speed corresponds to the speed of the vehicle 100. The speed detection unit 591 may calculate the speed of the vehicle 100 using any method utilizing the rotation of the roller RL. The speed detection unit 591 transmits the calculated speed of the vehicle 100 to the server 200. This speed is the first speed acquired by the first acquisition unit 212.

The display device 540 displays various kinds of information on inspection executed by the inspection equipment 500. For example, the display device 540 displays in real time the first speed measured by the speed detection unit 591.

### <Running Control of Vehicle 100>

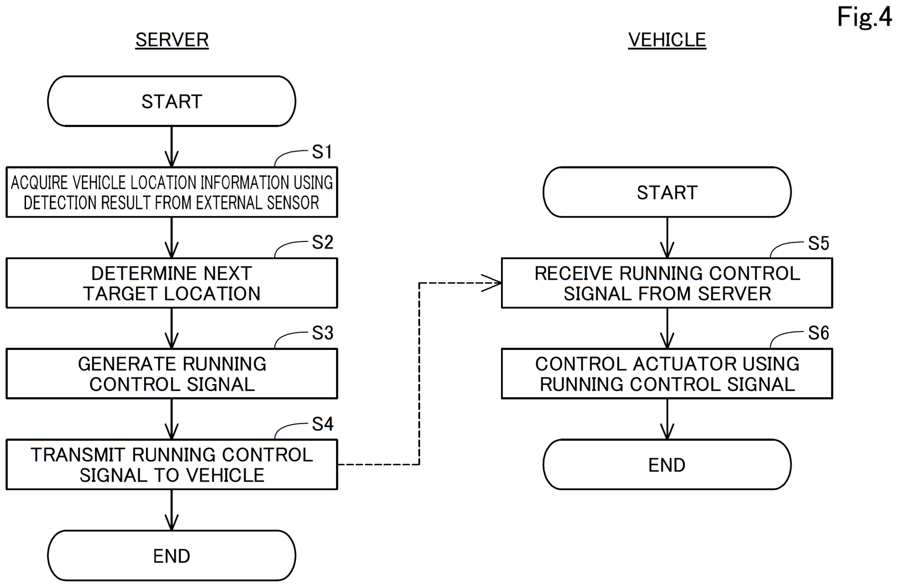

Fig. 4 is a flowchart illustrating a procedure of running control of the vehicle 100 according to the first embodiment. This procedure is executed to control the vehicle 100 to run by unmanned driving. In the procedure in Fig. 4, the processor 201 of the server 200 executes the program PG2, thus functioning as the remote control unit 211. Moreover, the processor 111 of the vehicle 100 executes the program PG1, thus functioning as the vehicle control unit 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

### <Inspection of Display Device 140>

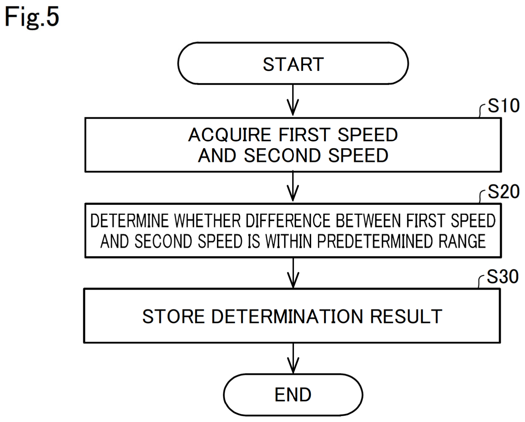

Fig. 5 is a flowchart illustrating a procedure of the inspection of the display device 140. The inspection of the display device 140 is executed when the vehicle 100 that has moved onto the inspection equipment 500 runs on the roller RL. In this embodiment, the vehicle 100 is controlled by the remote control unit 210 to move to the inspection equipment 500 by unmanned driving. Specifically, the vehicle 100 is controlled to move in such a manner that the wheel WL is supported by the roller RL illustrated in Fig. 3 and to run on the roller RL at predetermined speed. The predetermined speed is, for example, 40 km/h.

The inspection of the display device 140 is performed to secure accuracy of the speed displayed on the display device 140. The speed displayed on the display device 140 is measured by using the perimeter of the wheel WL as described above. However, the perimeter of the wheel WL may change due to an influence of tire pressure or the like. Therefore, the inspection equipment 500 uses the perimeter of the roller RL made of metal or the like for measurement. The roller RL has less change in perimeter due to surrounding environment as compared with the wheel WL. Therefore, the inspection of the speed displayed on the display device 140 is executed based on the speed measured by the inspection equipment 500.

As illustrated in Fig. 5, at Step S10, the first acquisition unit 212 acquires the first speed, and the second acquisition unit 213 acquires the second speed.

At Step S20, the inspection execution unit 214 determines whether the difference between the acquired first speed and the acquired second speed is within the predetermined range.

At Step S30, the inspection execution unit 214 stores in the memory 202 a result of the determination performed at Step S20.

As Step S30 is completed, the vehicle 100 moves from the second place PL2 by unmanned driving, and another inspection step or the like is executed.

Note that, at Step S20, if the difference between the first speed and the second speed is determined to be out of the predetermined range, it is assumed that at least one of the wheel WL, the vehicle speed sensor, and the display device 140 has abnormality.

The system 50 of the first embodiment described above includes the inspection execution unit 214 that uses the first speed and the second speed to execute the inspection of the display device 140. Therefore, it can be suppressed that the inspection result depends on an inspector's skill.

Moreover, according to the system 50 of the first embodiment, the inspection execution unit 214 determines whether the difference between the first speed and the second speed is within the predetermined range to execute the inspection. Therefore, by setting a speed range allowable as an error between the first speed and the second speed as the predetermined range, whether an error is included within this range can be determined.

Moreover, according to the system 50 of the first embodiment, the second acquisition unit 213 uses the image data output by the vehicle cabin camera 150 to acquire the second speed. The vehicle cabin camera 150 images the display device 140. Therefore, the vehicle cabin camera 150 that images the inside of the vehicle cabin can be utilized to execute the inspection.

### B. Second Embodiment:

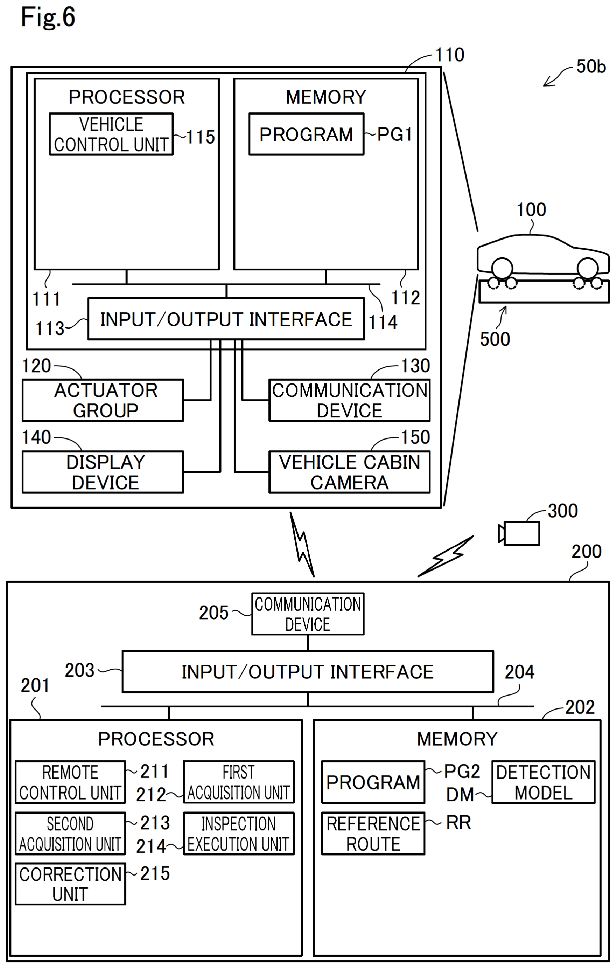

Fig. 6 is a block diagram illustrating a configuration of a system 50b according to a second embodiment. The system 50b of the second embodiment is different from the system 50 of the first embodiment in that the processor 201 further implements a function of a correction unit 215. Configurations not described below in particular are similar to those of the first embodiment.

The correction unit 215 corrects the speed displayed on the display device 140 of the vehicle 100 if the inspection execution unit 214 determines that the difference between the first speed and the second speed is out of the predetermined range. The speed displayed on the display device 140 is corrected based on the difference between the first speed and the second speed. An example described is a case in which the predetermined range is set to 10 km/h or less and the difference between the first speed and the second speed calculated by the inspection execution unit 214 is 15 km/h. This case means that the speed displayed on the display device 140 of the vehicle 100 is 15 km/h higher than the speed measured on the inspection equipment 500. The correction unit 215 calculates a correction value that makes the difference between the first speed and the second speed fall within the predetermined range. The correction value in the above-described example is, for example, -15 km/h. The correction unit 215 transmits this correction value to the vehicle 100. Note that the correction value may be a value other than the value that makes the difference between the first speed and the second speed zero. That is, the correction value may be any value that makes the difference between the first speed and the second speed fall within the predetermined range. For example, the correction value in the above-described example may be, for example, -6 km/h.

The display device 140 uses the speed transmitted from the vehicle speed sensor and the correction value transmitted from the correction unit 215 to display corrected speed. Specifically, the vehicle control device 110 included in the vehicle 100 calculates an added value of the speed transmitted from the vehicle speed sensor and the correction value transmitted from the correction unit 215. The calculated speed is transmitted to the display device 140. The display device 140 displays the corrected speed.

The system 50b of the second embodiment described above further includes the correction unit 215 that corrects the speed displayed on the display device 140 when the difference between the first speed and the second speed is determined to be out of the predetermined range. Therefore, an error of the speed displayed on the display device 140 can be reduced.

### C. Third Embodiment:

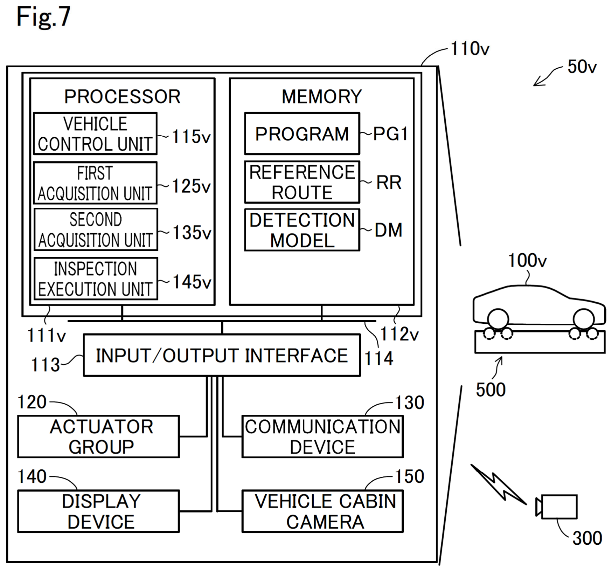

Fig. 7 is an explanatory diagram illustrating a schematic configuration of a system 50v according to a third embodiment. This embodiment is different from the first embodiment in that the system 50v does not include the server 200. Moreover, a vehicle 100v according to this embodiment is runnable by autonomous control of the vehicle 100v. Other configurations are the same as those of the first embodiment unless otherwise described. Note that the system 50v of the third embodiment may be used in combination with the system 50b of the second embodiment.

In this embodiment, a processor 111v of a vehicle control device 110v executes the program PG1 stored in a memory 112v, thus functioning as a vehicle control unit 115v. The vehicle control unit 115v acquires an output result of the sensor and uses the output result to generate the running control signal. The vehicle control unit 115v then outputs the generated running control signal to operate the actuator group 120, and thus can control the vehicle 100v to run by autonomous control. In this embodiment, the memory 112v stores, in addition to the program PG1, a detection model DM and a reference route RR in advance.

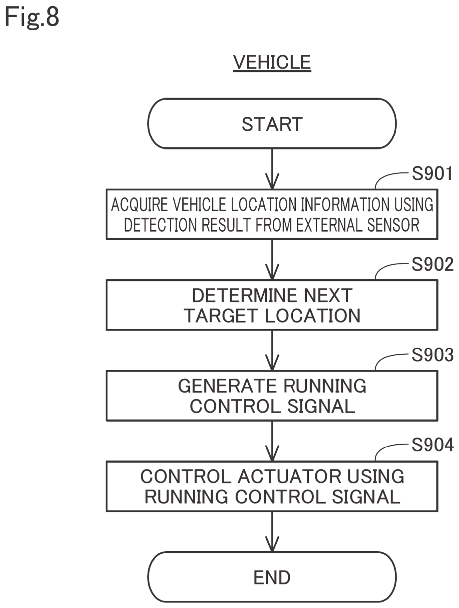

FIG. 8 is a flowchart showing a processing procedure for running control of the vehicle 100v in the second embodiment. In the procedure in Fig. 8, the processor 111v of the vehicle 100v executes the program PG1, thus functioning as the vehicle control unit 115v.

In step S901, the processor 111v of the vehicle controller 110v acquires vehicle location information using detection result output from the camera as the external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the system 50v in the present embodiment, it is possible to cause the vehicle 100v to run by autonomous control without controlling the vehicle 100v remotely using the server 200.

Moreover, as illustrated in Fig. 7, the processor 111v of this embodiment executes the program PG1 stored in the memory 112v, thus also functioning as a first acquisition unit 125v, a second acquisition unit 135v, and an inspection execution unit 145v. The first acquisition unit 125v, the second acquisition unit 135v, and the inspection execution unit 145v respectively have functions similar to those of the first acquisition unit 212, the second acquisition unit 213, and the inspection execution unit 214 of the first embodiment. Therefore, in this embodiment, processing similar to the inspection method illustrated in Fig. 5 is executed by the processor 111v of the vehicle 100v. Note that although not illustrated in Fig. 7, the processor 111v may demonstrate a function similar to that of the correction unit 215 of the second embodiment.

Also according to the system 50v of the third embodiment described above, similarly to the systems 50 and 50b of the first embodiment and the second embodiment, the running control and the inspection method of the vehicle 100v can be executed.

### D. Another Embodiment 1:

(D1) In each embodiment described above, the second acquisition unit 213 uses the image data output by the vehicle cabin camera 150 that images the display device 140, to acquire the second speed, but the present disclosure is not limited thereto. The second acquisition unit 213 may acquire the second speed from an imaging device that images the display device 140 and provided outside of the vehicle 100. Such an imaging device is, for example, a camera provided to the factory FC. The imaging device may be one of the plurality of sensors 300 described above. Moreover, the second acquisition unit 213 may acquire the second speed from the vehicle speed sensor included in the vehicle 100. Moreover, the second acquisition unit 213 may acquire the second speed from the vehicle control device 110 that controls display on the display device 140.

(D2) In each embodiment described above, the inspection execution unit 214 may perform notification related to the determination result. For example, the inspection execution unit 214 notifies result that the difference between the first speed and the second speed is within the predetermined range or that the difference is out of the predetermined range. The notification is performed by, for example, displaying visual information on the display device 540 provided to the inspection equipment 500. The notification may be displayed on a display device different from a speedometer without limitation to the inspection equipment 500. Moreover, the notification may include, in addition to the determination result, information on the difference between the first speed and the second speed. With such a configuration, the result of the determination performed by the inspection execution unit 214 can be notified to the inspector.

(D3) In each embodiment described above, the first acquisition unit 212 may acquire the first speed after acceleration of the vehicle 100 measured by utilizing the rotation of the roller RL falls within a predetermined range. Moreover, the second acquisition unit 213 may acquire the second speed after acceleration calculated based on the speed displayed on the display device 140 falls within the predetermined range. The predetermined range of acceleration is set as an acceleration range indicating that the vehicle 100 completes acceleration and a running state is stable. The predetermined range of acceleration is, for example, 0.1 m/s² or less. Moreover, the first acquisition unit 212 and the second acquisition unit 213 may respectively acquire the first speed and the second speed after predetermined time passes from a start of running of the vehicle 100 on the roller RL. The predetermined time is set as time required for the vehicle 100 to complete acceleration and a running state to be stable. The predetermined time is, for example, 20 seconds. With such a configuration, the first acquisition unit 212 and the second acquisition unit 213 can acquire the speed when the vehicle 100 completes acceleration and the running state is comparatively stable.

(D4) In each embodiment described above, the inspection execution unit 214 determines whether the difference between the first speed and the second speed is within the predetermined range to execute the inspection, but the present disclosure is not limited thereto. The inspection execution unit 214 may execute the inspection in any method using the first speed and the second speed. For example, the inspection execution unit 214 may compare the first speed and the second speed to execute the inspection. The inspection execution unit 214 may perform the inspection, for example, by comparing the time variation of the first speed with the time variation of the second speed.

(D5) In each embodiment described above, the vehicle 100 runs by unmanned driving, but the present disclosure is not limited thereto. The vehicle 100 may run by manned driving in which an occupant drives.

(D6) In each embodiment described above, the memory 112, 112v, 202, 532 may be any storage device. Examples of such a storage device include an HDD (hard disc drive), an SSD (solid state drive), and a DRAM (dynamic random access memory).

(D7) In each embodiment described above, at least one function of the remote control unit 211, the first acquisition unit 212, the second acquisition unit 213, the inspection execution unit 214, and the correction unit 215 may be executed by the inspection equipment 500.

(D8) In each embodiment described above, the vehicle 100 may have any number of wheels WL. The number of wheels WL is two or more, for example. When the vehicle 100 has only one wheel, that wheel WL is sandwiched and supported by two rollers RL.

### E. Another Embodiment 2:

(E1) In each of the above-described embodiments, the sensor 300 is not limited to the camera but may be the distance measuring device, for example. The distance measuring device is a light detection and ranging (LiDAR) device, for example. In this case, detection result output from the sensor 300 may be three-dimensional point cloud data representing the vehicle 100. The server 200 and the vehicle 100 may acquire the vehicle location information through template matching using the three-dimensional point cloud data as the detection result and reference point cloud data, for example

(E2) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects surrounding environment of the vehicle 100. Specifically, the internal sensor may include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(E3) In the above-described third embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.

(E4) In the above-described third embodiment, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the system 50v may be entirely provided at the vehicle 100v. Specifically, the processes realized by the system 50v in the present disclosure may be realized by the vehicle 100v alone.

(E5) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(E6) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle controller 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(E7) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(E8) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(E9) In each of the embodiments described above, some or all of the functions and processes that are implemented by software may also be implemented by hardware. Further, some or all of the functions and processes that are implemented by hardware may also be implemented by software. Examples of the hardware used to implement various functions in each of the embodiments described above include various circuits, such as integrated circuits and discrete circuits.

The present disclosure is not limited to the embodiments described above but can be implemented in a variety of configurations without departing from the spirit of the present disclosure. For example, in order to solve some or all of the problems described above or to achieve some or all of the effects described above, the technical features of the embodiments can be substituted or combined as appropriate. In addition, unless the technical feature is explained herein as being essential, it can be eliminated as appropriate. For example, the present disclosure may be implemented in embodiments described below.
(1) According to one embodiment of the present disclosure, a system is provided. The system includes a first acquisition unit, a second acquisition unit, and an inspection execution unit. The first acquisition unit acquires first speed from inspection equipment. The inspection equipment includes a roller that is rotatable while supporting a wheel of a vehicle and measures speed of the vehicle by utilizing a rotation of the roller. The first speed is the speed measured by the inspection equipment. The second acquisition unit acquires second speed during measurement of the speed of the vehicle by using the inspection equipment. The second speed is speed displayed on a display device included in the vehicle to display the speed of the vehicle. The inspection execution unit uses the acquired first speed and the acquired second speed to execute inspection of the display device.
   The system of this embodiment includes the inspection execution unit that uses the first speed that is the speed measured by the inspection equipment and the second speed that is the speed displayed on the display device of the vehicle to execute the inspection of the display device. Therefore, it can be suppressed that an inspection result depends on an inspector's skill.
(2) In the system of the aforementioned embodiment, the inspection execution unit may determine whether difference between the first speed and the second speed is within a predetermined range to execute the inspection.
   According to the system of this embodiment, the inspection execution unit determines whether the difference between the first speed and the second speed is within the predetermined range to execute the inspection. Therefore, by setting a speed range allowable as an error of the second speed as the predetermined range, whether the second speed is included within this range can be determined.
(3) In the system of the aforementioned embodiment, the second acquisition unit may acquire the second speed by using image data output by an imaging device that images the display device.
   According to the system of this embodiment, the second acquisition unit may acquire the second speed by using the image data output by the imaging device that images the display device. Therefore, a camera provided to a vehicle cabin or a camera that images the vehicle can be utilized to execute the inspection.
(4) The system of the aforementioned embodiment may further include a correction unit that corrects the speed displayed on the display device based on the difference between the first speed and the second speed when the difference between the first speed and the second speed is determined to be out of the predetermined range. The display device may display the corrected speed.
   The system of this embodiment further includes the correction unit that corrects the speed displayed on the display device when the difference between the first speed and the second speed is determined to be out of the predetermined range. Therefore, an error of the speed displayed on the display device can be reduced.
(5) In the system of the aforementioned embodiment, the inspection execution unit may further execute notification related to a determination result.
   According to the system of this embodiment, the inspection execution unit executes the notification related to the determination result. Therefore, the determination performed by the inspection execution unit can be notified to the inspector.
(6) The system of the aforementioned embodiment may further include a server provided outside of the vehicle. The server may include the first acquisition unit, the second acquisition unit, the inspection execution unit, and a remote control unit. The remote control unit may generate a running control signal to control an actuator included in the vehicle, and transmit the running control signal to the vehicle to control autonomous driving of the vehicle. The remote control unit may control the vehicle to move to the inspection equipment in such a manner that the wheel of the vehicle is supported by the roller, and control the vehicle to run at predetermined speed.
   According to the system of this embodiment, the server provided outside of the vehicle includes the first acquisition unit, the second acquisition unit, the inspection execution unit, and the remote control unit. Therefore, the inspection of the vehicle can be executed autonomously by using the server.

## Claims

1. A system (50, 50b, 50v) comprising:
a first acquisition unit (125v, 212) configured to acquire first speed from inspection equipment (500), the inspection equipment comprising a roller (RL) that is rotatable while supporting a wheel (WL) of a vehicle (100, 100v), and measuring speed of the vehicle by utilizing a rotation of the roller, the first speed being the speed measured by the inspection equipment;
a second acquisition unit (135v, 213) configured to acquire second speed during measurement of the speed of the vehicle by using the inspection equipment, the second speed being speed displayed on a display device (140) included in the vehicle to display the speed of the vehicle; and
an inspection execution unit (145v, 214) configured to use the acquired first speed and the acquired second speed to execute inspection of the display device.

2. The system according to claim 1, wherein the inspection execution unit determines whether difference between the first speed and the second speed is within a predetermined range to execute the inspection.

3. The system according to claim 1, wherein the second acquisition unit acquires the second speed by using image data output by an imaging device (150) that images the display device.

4. The system according to claim 2, further comprising a correction unit (215) configured to correct the speed displayed on the display device based on the difference between the first speed and the second speed when the difference between the first speed and the second speed is determined to be out of the predetermined range, wherein
the display device displays the corrected speed.

5. The system according to claim 3, wherein the inspection execution unit further executes notification related to a determination result.

6. The system according to any one of claim 1 to 5, further comprising a server provided outside of the vehicle, wherein
the server comprises:
the first acquisition unit;
the second acquisition unit;
the inspection execution unit; and
a remote control unit (211) configured to generate a running control signal to control an actuator included in the vehicle, and transmit the running control signal to the vehicle to control autonomous driving of the vehicle, and
the remote control unit controls the vehicle to move to the inspection equipment in such a manner that the wheel of the vehicle is supported by the roller, and controls the vehicle to run at predetermined speed.
